# EUROPÄISCHE PATENTANMELDUNG

(11) **EP 1 367 507 A1**
(43) Veröffentlichungstag der Anmeldung: **03.12.2003**
(21) Anmeldenummer: 03012401.0
(22) Anmeldetag: 30.05.2003
(51) Int. Cl.: G06F 17/30, H04L 12/28

(54) **Drahtloses Kommunikationssystem und Verfahren zum Betrieb eines drahtlosen Kommunikationssystems**

(30) Priorität: 31.05.2002 DE 10224506
(71) Anmelder: ARtem GmbH, 89073 Ulm (DE)
(72) Erfinder: Marsenu, Michael, 89073 Ulm (DE)
(74) Vertreter: Weber, Gerhard, Dipl.-Phys.

(57) **Zusammenfassung**

Für ein lokales drahtloses Datenkommunikationssystem und ein Verfahren zum Betrieb eines solchen Kommunikationssystems mit mehreren räumlich getrennt angeordneten Basisstationen wird die Zwischenspeicherung von für Benutzer von Mobilfunkgeräten höher relevanten Informationen in Stationsspeichern der Basisstationen vorgeschlagen.

## Beschreibung

Die Erfindung betrifft ein drahtloses Kommunikationssystem, insbesondere ein räumlich begrenztes lokales Kommunikationssystem und ein Verfahren zum Betrieb eines solchen drahtlosen Kommunikationssystems.

Für die zunehmende Verwendung von mobilen Datenendgeräten u.a. zur Datenkommunikation sind drahtlose lokal begrenzte Kommunikationssysteme von besonderem Vorteil. Solche drahtlosen Kommunikationssysteme können insbesondere auch durch mobile Datenendgeräte, welche sich nur vorübergehend im räumlich begrenzten Bereich des drahtlosen Kommunikationssystems befinden, genutzt werden und dem Gerätebenutzer den Abruf spezifischer Informationen zu seinem aktuellen Aufenthaltsort als auch allgemeinen Informationen, z.B. durch Verbindung über das lokale System in ein anderes, insbesondere ein überregionales System wie das Internet, ermöglichen.

Das lokale drahtlose Kommunikationssystem umfasst typischerweise mehrere räumlich verteilt angeordnete Basisstationen, welche über ein lokales Netzwerk vorzugsweise leitungsgebunden verbunden sind. Das lokale Netzwerk kann insbesondere auch eine Zentrale enthalten. Die Basisstationen enthalten die Schnittstellen für die drahtlose Kommunikation mit den Mobilgeräten. Die Abwicklung der drahtlosen Kommunikation kann z.B. nach einem Standard wie wireless-LAN, Bluetooth etc. erfolgen.

Derartige lokale drahtlose Kommunikationssysteme können beispielsweise in Flughäfen, Bürogebäuden, Messegeländen etc. besonders vorteilhaft eingesetzt sein.

Der vorliegenden Erfindung liegt die Aufgabe zugrunde, ein mit geringem Aufwand leistungsfähiges drahtloses lokales Kommunikationssystem und ein Verfahren zum Betrieb eines solchen lokalen, drahtlosen Kommunikationssystems anzugeben.

Erfindungsgemäße Lösungen sind in den unabhängigen Patentansprüchen abgegeben. Die abhängigen Ansprüche enthalten vorteilhafte Ausgestaltungen und Weiterbildungen der Erfindung.

Die Abspeicherung von Informationen in den Basisstationen ermöglicht vorteilhafterweise für den Abruf dieses nachfolgend als Stationsinformationen bezeichneten Informationsinhalte durch die Mobilgeräte eine Verkürzung der Abfragezeit und eine Entlastung der netzwerkinternen Kommunikation. Der Aufwand für die Stationsspeicher ist gering und fällt durch die typischerweise geringe Anzahl von Basisstationen innerhalb eines lokalen drahtlosen Kommunikationssystems nur in entsprechend geringer Anzahl an.

Dem steht eine erheblich gesteigerte Leistungsfähigkeit des drahtlosen Kommunikationssystems gegenüber, indem zum einen drahtlose Verbindungen bei Informationsabrufen von Seiten der Mobilgeräte in kürzerer Zeit abgeschlossen werden können und vor allem, indem der Datenverkehr innerhalb der Basisstationen untereinander, mit einer Zentrale und/oder externen Datenquellen verbindenden Netzwerks deutlich reduziert werden kann. Hierbei kommt insbesondere die Erkenntnis zum Tragen, dass innerhalb solcher lokaler Datenkommunikationssysteme von den im Erfassungsbereich betriebenen Mobilgeräten weit überwiegend auf den Erfassungsbereich bezogene Informationen abgefragt werden, auch wenn das Kommunikationssystem darüber hinaus gehende Verbindungen wie z.B. das Internet anbietet. Beispielsweise sind auf Flughäfen primär Flugpläne, Passagieraufrufe und Anschlüsse an andere Verkehrsmittel, bei großen Tagungen Teilnehmerlisten, Tagungspläne und Sonderankündigungen, bei Messeveranstaltungen Übersichtskarten des Geländes, Ausstellerlisten, Vorführungsankündigungen etc. von Interesse.

Unter den abrufbaren Informationen können solche voraussehbar häufig abgerufenen Informationen unabhängig von einer konkreten Abfrage eines Mobilgeräts in Form einer Vorlageinformation als Teil der im Stationsspeicher abgespeicherten Informationen abgespeichert und in regelmäßigen Zeitabständen und/oder bei Änderung des Informationsinhalts durch eine Zentrale oder eine außerhalb des Kommunikationssystems und dessen Netzwerk liegende Datenquelle aktualisiert werden, beispielsweise Flugpläne, Sonderankündigungen etc. Solche Vorlageinformationen sind dann dauerhaft im Stationsspeicher vorhanden und werden lediglich durch aktualisierteInhalte überschrieben. Zu derartigen Vorlageinformation kann dem Benutzer eines Mobilgerätes eine Auflistung bereitgestellt werden Die von den Basisstationen getrennte Datenquelle kann z.B. eine Zentrale des Netzwerks oder eine externe Quelle außerhalb des Netzwerks sein.

Gemäß einer vorteilhaften Weiterbildung der Erfindung können Informationen, welche für einen Teil der Mobilgeräte bzw. deren Nutzer interessant sein und/oder welche besonders häufig nachgefragt wurden und/oder nicht oder selten verändert werden, auch in einem Speicher der Mobilgeräte, vorzugsweise in einem über das drahtlose Kommunikationssystems von den Basisstationen oder von einer mit diesen verbundenen Zentrale kontrollierbaren Speicher der Mobilgeräte löschbar eingeschrieben werden. Von besonderem Vorteil ist hierfür, wenn die Mobilgeräte aus einem von dem drahtlosen Kommunikationssystem unabhängigen, insbesondere auch benutzereigenen Datenendgerät und einer auf das drahtlose Kommunikationssystem abgestimmten Adaptereinrichtung, welche auch die Schnittstelle zur drahtlosen Kommunikation enthält, zusammengesetzt sind. Vorzugsweise ist dabei zumindest in eingeschränktem Maße ein Datenaustausch zwischen Adaptereinrichtung und Basisstation ohne Einbindung des angeschlossenen Datenendgerätes möglich, beispielsweise zur Einspeicherung von Teilinformationen oder der erwähnten Auflistung von Vorlageinformationen in den Speicher der Adaptereinrichtung.

Der Stationsspeicher kann alternativ oder zusätzlich als temporäre Stationsinformation solche Informationen enthalten, welche von den Mobilgeräten über die drahtlose Schnittstelle angefordert und von einer externen Datenquelle übermittelt wurden. Da diese Informationen im Regelfall über die häufig abgefragten Informationen hinaus stark variieren, werden diese Stationsinformationen durch neu abgefragte und übermittelte Informationen überschrieben, wobei die Basisstationen vorteilhafterweise eine Rangfolge innerhalb der gespeicherten Stationsinformationen erstellen können und die rangniedrigen Stationsinformationen bevorzugt von neu abgerufenen und übermittelten Informationen überschrieben werden. Ein Kriterium, dessen alleinige Anwendung zu dem firstin-first-out-Vorgehen führt, ist die seit der Einspeicherung verstrichene Zeit mit niedrigerem Rang für ältere Stationsinformationen. Ein Kriterium, welches eine automatische Relevanzbewertung beinhaltet, berücksichtigt die Häufigkeit, mit welcher eine Information abgefragt wird, und weist mehrfach innerhalb eines vorgebbaren Zeitintervalls abgefragten Informationen einen höheren Rang zu als nur einmal oder selten abgefragten Informationen.

Bei der Abspeicherung von Stationsinformationen kann auch der Datenumfang einer Information mit berücksichtigt werden, indem z.B. ein Limit überschreitende Informationen gar nicht als Stationsinformationen gespeichert und/oder umfangreiche Informationen gegenüber Informationen geringen Umfangs rangniedriger bewertet werden.

Diese und andere Kriterien können vorteilhafterweise in Kombination auf die temporär gespeicherten Stationsinformationen angewandt werden.

Die Stationsinformationen können vorteilhafterweise in den einzelnen Basisstationen verschieden sein, was insbesondere berücksichtigt, dass innerhalb des Bereichs eines lokalen drahtlosen Kommunikationssystems Teilbereiche mit unterschiedlichen Themenschwerpunkten vorliegen können, zu welchem sowohl unterschiedliche Vorgabeinformationen zweckmäßig sind als auch durch Benutzerinteresse unterschiedliche temporär gespeicherte Stationsinformationen entstehen.

Bei Übermittlung einer Informationsanfrage, welche auch z.B. in aus Internet-Anwendungen bekannter Weise aus einer die Informationen identifizierenden Adresse oder einer Abfrage (Query) innerhalb eines Datenbank- oder Suchsystems bestehen kann, von einem Mobilgerät an eine Basisstation kann dort geprüft werden, ob die angefragte Information als Stationsinformation gespeichert vorliegt oder nicht. Die angefragte Information kann dann aus dem Stationsspeicher ausgelesen oder andernfalls über das Netzwerk von der Zentrale oder einer externen Datenquelle angefordert und an das Mobilgerät übertragen werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Verfahren zum Betrieb eines drahtlosen, räumlich begrenzten lokalen Kommunikationssystems mit einer Mehrzahl von Basisstationen und Mobilgeräten, welche mit diesen Basisstationen über drahtlose Schnittstellen kommunizieren und über die Basisstationen Informationen abrufen können, welche in einer von den Basisstationen getrennten Quelle erstellt werden und an die Basisstationen übertragen werden können, **dadurch gekennzeichnet, dass** ein Teil der abrufbaren Information unabhängig von einer Abfrage eines Mobilgerätes von der Quelle an die Basisstation übertragen und dort in einem Basisspeicher als Stationsinformation gespeichert wird und diese gespeicherten Stationsinformationen in den Basisstationen direkt von Mobilgeräten über die drahtlosen Schnittstellen abgerufen werden.

2. Verfahren nach Anspruch 1, **dadurch gekennzeichnet, dass** von Mobilgeräten unter Einbindung des Netzwerks über eine bestimmte Basisstation abgerufene Informationen als Stationsinformationen in dieser Basisstation abgespeichert werden.

3. Verfahren nach Anspruch 1 oder 2, **dadurch gekennzeichnet, dass** ältere Stationsinformationen durch neue über das Netzwerk abgerufene Informationen überschrieben werden.

4. Verfahren nach einem der Ansprüche 1 bis 3, **dadurch gekennzeichnet, dass** wenigstens ein Teil der Stationsinformationen nur temporär in den Basisstationen gespeichert werden.

5. Verfahren nach einem der Ansprüche 1 bis 4, **dadurch gekennzeichnet, dass** für gespeicherte Stationsinformationen eine Relevanz-Rangfolge unter Berücksichtigung der Abfragehäufigkeit gebildet wird und rangniedrigere Stationsinformationen bevorzugt durch neue über das Netzwerk angerufene Informationen überschrieben werden.

6. Verfahren nach einem der Ansprüche 1 bis 5, **dadurch gekennzeichnet, dass** ein Teil der Stationsinformationen von einer Netzwerkzentrale vorgegeben und unabhängig von einer Mobilgerät-Abfrage als Vorgabe-Information in den Basisstationen abgespeichert wird.

7. Verfahren nach Anspruch 6, **dadurch gekennzeichnet, dass** die Vorgabeinformationen wenigstens teilweise zwischen den verschiedenen Basisstationen variieren.

8. Verfahren nach einem der Ansprüche 1 bis 8, **dadurch gekennzeichnet, dass** ein Teil der Stationsinformationen temporär in einen Speicher des Mobilgeräts eingeschrieben werden.

9. Drahtloses Kommunikationssystem mit mehreren in einem Netzwerk verbundenen Basisstationen, welche räumlich getrennt innerhalb eines begrenzten lokalen Bereichs angeordnet sind und über drahtlose Schnittstellen mit Mobilgeräten innerhalb des Bereichs kommunizieren und Informationen, welche in einer von den Basisstationen getrennten Datenquelle erstellt und abrufbar sind, auf Anfrage eines Mobilgeräts an dieses über die drahtlose Schnittstelle übermitteln, **dadurch gekennzeichnet, dass** die Basisstation einen Stationsspeicher enthält, dass Informationen von der getrennten Quelle im Stationsspeicher zwischengespeichert sind und von der Basisstation ohne Kommunikationsverbindung in das Netzwerk an ein Mobilgerät über die drahtlose Schnittstelle übertragbar sind und dass die Basisstation bei Anforderung einer Information durch ein Mobilgerät prüft, ob die angeforderte Information in ihrem Zwischenspeicher vorliegt und diese dann an das Mobilgerät über die drahtlose Schnittstelle übermittelt und und andernfalls die Anforderung in das Netzwerk weiterreicht.

10. Kommunikationssystem nach Anspruch 9, **dadurch gekennzeichnet, dass** eine Basisstation neu über das Netzwerk abgerufene Informationen als temporäre Stationsinformation in ihrem Informationsspeicher abspeichert.

11. Kommunikationssystem nach einem der Ansprüche 9 oder 10, **dadurch gekennzeichnet, dass** eine Basisstation eine Rangfolge innerhalb der Stationsinformationen unter Berücksichtigung wenigstens einer der Größen Abfragehäufigkeit und Speicherdauer bildet und rangniedrigere Stationsinformationen bevorzugt durch neu über das Netzwerk abgerufene Informationen überschreibt.

12. Kommunikationssystem nach einem der Ansprüche 9 bis 11, **dadurch gekennzeichnet, dass** der Stationsspeicher zum Teil als Stationsinformation von einer Netzwerkzentrale vorgegebene Vorgabeinformationen enthält, welche nicht durch von einem Mobilgerät über das Netzwerk abgerufene Informationen überschrieben werden.

13. Kommunikationssystem nach Anspruch 12, **dadurch gekennzeichnet, dass** die Basisstation oder eine Netzwerkzentrale fortlaufend über das Netzwerk aktualisiert.

14. Kommunikationssystem nach einem der Ansprüche 12 oder 13, **dadurch gekennzeichnet, dass** die Basisstation allen Mobilgeräten eine Auflistung der gespeicherten Vorgabeinformationen bereitstellt.

15. Kommunikationssystem nach einem der Ansprüche 9 bis 14, **dadurch gekennzeichnet, dass** das Mobilgerät ein vom Kommunikationssystem unabhängiges Datenendgerät und mit diesem lösbar verbunden eine Adaptereinrichtung, welche eine Schnittstelle zur drahtlosen Kommunikation enthält und auf das Kommunikationssystem abgestimmt ist, enthält.

16. Kommunikationssystem nach Anspruch 15, **dadurch gekennzeichnet, dass** die Adaptereinrichtung einen separaten Adapterspeicher enthält und dass Informationen in den Adapterspeicher einspeicherbar sind.
